Europäisches Patentamt

European Patent Office

Office européen des brevets

(11) Veröffentlichungsnummer: **0 374 352**
**A1**

## (12) EUROPÄISCHE PATENTANMELDUNG

(21) Anmeldenummer: **89109256.1**

(22) Anmeldetag: **23.05.89**

(51) Int. Cl.5: **G01F 1/68**

(43) Veröffentlichungstag der Anmeldung:
**27.06.90 Patentblatt 90/26**

(84) Benannte Vertragsstaaten:
**AT BE CH DE ES FR GB GR IT LI LU NL SE**

(71) Anmelder: **Siemens Aktiengesellschaft**
**Wittelsbacherplatz 2**
**D-8000 München 2(DE)**

(72) Erfinder: **Schifferl, Ludwig, Dipl.-Ing.**
**Gärtnerstrasse 6**
**D-8400 Regensburg(DE)**

(54) **Luftmassenmesser.**

(57) Luftmassenmesser mit einer Brückenschaltung, in deren einem Brückenzweig ein Sensorwiderstand (RS) in Reihe mit einem Kompensationswiderstand (RK) angeordnet ist und in dessen zweitem Brückenzweig ein Spannungsteiler angeordnet ist. Die am Sensorwiderstand (RS) abfallende Spannung und die am Spannungsteiler abgreifbare Teilspannung werden in einem Komparator (K) miteinander verglichen. Vom Ausgangssignal des Komparators wird ein Monoflop (MF) mit konstanter Standzeit angestoßen, durch dessen Ausgangssignal eine Stromquelle (Q) in Reihe zum Sensorwiderstand geschaltet wird. Durch diese Anordnung ist die Brückenspannung vom Heizstrom entkoppelt. Der zu messende Luftmassenstrom kann einfach aus dem in der Speiseleitung zur Brückenschaltung fließenden Strom ermittelt werden.

## FIG2

# Luftmassenmesser

Die Erfindung betrifft einen Luftmassenmesser nach dem Oberbegriff des Anspruchs 1.

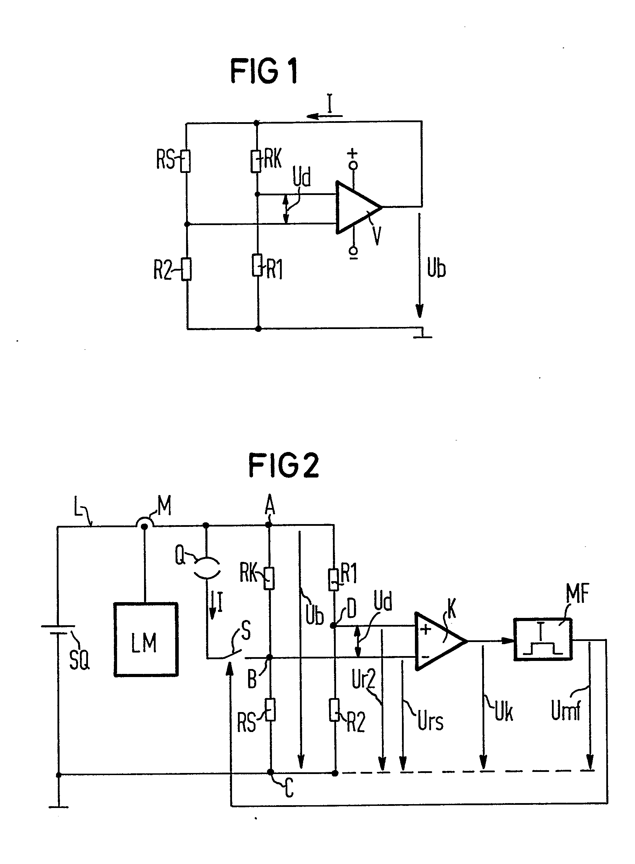

Bei dem bekannten Luftmassenmesser nach FIG 1 sind ein Sensorwiderstand RS und ein Kompensationswiderstand RK mit zwei weiteren Widerständen R1 und R2 zu einer Brückenschaltung zusammengefügt. Der Sensorwiderstand RS ist ein Heißfilmwiderstand, der einem zu messenden Luftmassenstrom, beispielsweise im Ansaugkanal einer Kraftfahrzeug- Brennkraftmaschine ausgesetzt ist. Das Verhältnis von RS zu R2 ist gleich dem Verhältnis von RK zu R1, wenn der Sensorwiderstand RS auf einen Temperatur-Sollwert erwärmt ist. Dabei sind RS und R2 niederohmig im Vergleich zu RK und R1, sodaß der größte Teil des Stromes I durch den Sensorwiderstand RS fließt.

Durch die bekannte Schaltung soll die Temperatur des Sensorwiderstandes auf diesem Sollwert konstant gehalten werden. Der zu messende Luftmassenstrom kühlt den Sensorwiderstand ab. Die Heizleistung, die erforderlich ist, um den Sensorwiderstand auf dem vorgegebenen Temperatur-Sollwert zu halten, ist ein Maß für den zu messenden Wert des Luftmassenstromes.

Bei einer Temperaturänderung des Sensorwiderstandes in Folge einer Änderung des Luftmassenstromes wird die Brücke verstimmt, sodaß eine von Null abweichende Diagonalspannung Ud entsteht. Diese Spannungsdifferenz wird in einem Verstärker V verstärkt und als Brückenspannung Ub an die Brücke angelegt. Der sich einstellende Strom I wird vergrößert, wenn der Sensorwiderstand abkühlt und umgekehrt. Auf diese Weise wird der Sensorwiderstand auf Einhaltung des vorgegebenen Temperatur-Sollwertes geregelt.

Bei der bekannten Schaltung sind die Brückenspannung Ub und der Heizstrom I proportional zur Diagonalspannung Ud. Dadurch ergibt sich eine Rückwirkung des Heizstromes I auf die Diagonalspannung Ud ohne Änderung der Temperatur bzw. des Widerstandswertes des Sensorwiderstandes RS.

Diese ungewünschte zusätzliche Regelschleife im Regelkreis bewirkt, daß die Offsetspannung des Verstärkers V einen erheblichen Einfluß auf die Dynamik des Regelkreises erhält: Die Diagonalspannung Ud wird wesentlich durch die Offsetspannung bestimmt. Dadurch wirkt die zusätzliche Regelschleife im Regelkreis je nach Vorzeichen und Betrag der Offsetspannung mehr oder weniger stark als Mit- oder Gegenkopplung. Dies kann zum Blockieren der Regelung oder zum Überschwingen bis in die Begrenzung führen.

Dieses Problem wurde bisher dadurch gelöst, daß die Offsetspannung des Verstärkers V auf einen festgelegten Wert abgeglichen wurde. Neben einer dadurch entstehenden Erhöhung der Fertigungskosten kann sich aber trotzdem das dynamische Verhalten des Regelkreises durch Temperaturänderung und damit verbunden Offsetspannungsdrift des Verstärkers V ändern und die genannten nachteiligen Folgen haben.

Es ist deshalb eine Aufgabe der Erfindung, einen Luftmassenmesser zu schaffen, bei dem keine gegenseitige Abhängigkeit zwischen Brückenspannung und Heizstrom auftreten kann, damit die Regelung der Temperatur des Sensorwiderstandes unbeeinflußt von zusätzlichen, störenden Regelschleifen erfolgen kann.

Diese Aufgabe wird erfindungsgemäß durch die im Kennzeichen des Anspruches 1 genannten Merkmale gelöst.

Bei dieser Lösung wird die Brückenspannung vom Heizstrom nicht beeinflußt. Es wird von der Offsetspannung eines den bekannten Verstärker ersetzenden Komparators kein Einfluß auf die Dynamik des Regelkreises ausgeübt. Das Ausgangssignal des Komparators ist ein pulsweitenmoduliertes Digitalsignal das sich besonders gut für eine störungsfreie Übertragung eignet und den zeitlichen Ablauf bei jedem Meßzyklus in eine Meßphase und eine Heizphase aufteilt.

Zusätzliche Vorteile ergeben sich bei einer Weiterbildung des Erfindungsgegenstandes gemäß den Unteransprüchen. Danach ist zur Ermittlung der Meßgröße - des Luftmassenstromes - lediglich ein in der Speiseleitung der Schaltung angeordnetes Strommeßinstrument mit anschließender Auswerteschaltung erforderlich.

Auf zusätzliche Signalleitungen zur Übermittlung eines Meßsignals kann verzichtet werden. Dies ist insbesondere bei größerem Abstand zwischen Bruckenschaltung und Auswerteschaltung von Vorteil.

Für den Fall, daß die Brückenspannung und der Heizstrom konstant gehalten werden, ist die Meßgröße proportianol zur Frequenz des Ausgangssignals des Komparators und damit einfach zu bestimmen.

Die Erfindung wird anhand der Figuren näher erläutert. Es zeigen:

FIG 1 die Schaltung eines bekannten Luftmassenmessers,

FIG 2 eine Schaltung des erfindungsgemäßen Luftmassenmessers,

FIG 3 den zeitlichen Verlauf bestimmter Spannungen bei dem erfindungsgemäßen Luftmassenmesser.

Die Funktionsweise des bekannten Luftmassenmessers nach FIG 1 wurde bereits eingangs beschrieben.

Demgegenüber zeigt FIG 2 die Schaltung des erfindungsgemäßen Luftmassenmessers. In einer Brückenschaltung mit den Knoten A, B, C und D ist in einem ersten Brückenzweig zwischen den Knoten A und B ein Kompensationswiderstand RK und zwischen den Knoten B und C ein Sensorwiderstand RS angeordnet. In einem zweiten Brückenzweig ist zwischen den Knoten A und D ein erster Widerstand R1 und zwischen den Knoten D und C ein zweiter Widerstand R2 angeordnet. Das Verhältnis dieser Widerstände zueinander bei abgeglichener Brücke ist wie bei der bekannten Schaltung: RK/RS = R1/R2 d.h., RS/R2 = RK/R1.

Der Knoten B ist mit dem invertierenden Eingang eines Komparators K verbunden, dessen nichtinventierender Eingang mit dem Knoten D verbunden ist. Zwischen den Knoten A und C ist eine Brückenspannung Ub angelegt, die aus einer Konstantspannungsquelle SQ gewonnen wird, wobei alle Spannungen auf das am Knoten C liegende Potential bezogen sind.

Am invertierenden Eingang des Komparators K liegt demnach eine am Sensorwiderstand RS abfallende Spannung Urs an, während am nichtinvertierenden Eingang die am zweiten Widerstand R2 abfallende Spannung Ur2 anliegt. Die Differenz beider Spannungen Urs - Ur2 ist die Diagonalspannung Ud der Brücke zwischen den Knoten B und D. Bei abgeglichener Brücke - wenn der Sensorwiderstand auf den Temperatur-Sollwert aufgeheizt ist - ist Ud = Null.

Der Ausgang des Komparators K, an welchem eine Spannung Uk abgreifbar ist, ist mit dem Eingang eines nachfolgenden Monoflops MF verbunden, welches auf eine konstante Standzeit T eingestellt ist. Vom Ausgangssignal Umf des Monoflops MF wird ein Schalter S betätigt, welcher eine Konstantstromquelle Q parallel zum Kompensationswiderstand RK bzw. in Reihe mit dem Sensorwiderstand RS schaltet.

In der Speiseleitung L der Brückenschaltung zwischen der Konstantspannungsquelle SQ und dem Knoten A ist ein Strommeßinstrument M angeordnet, welches den in der Speiseleitung L fließenden Strom mißt und ein dem Meßwert entsprechendes Ausgangssignal einer Auswerteeinheit LM zuführt.

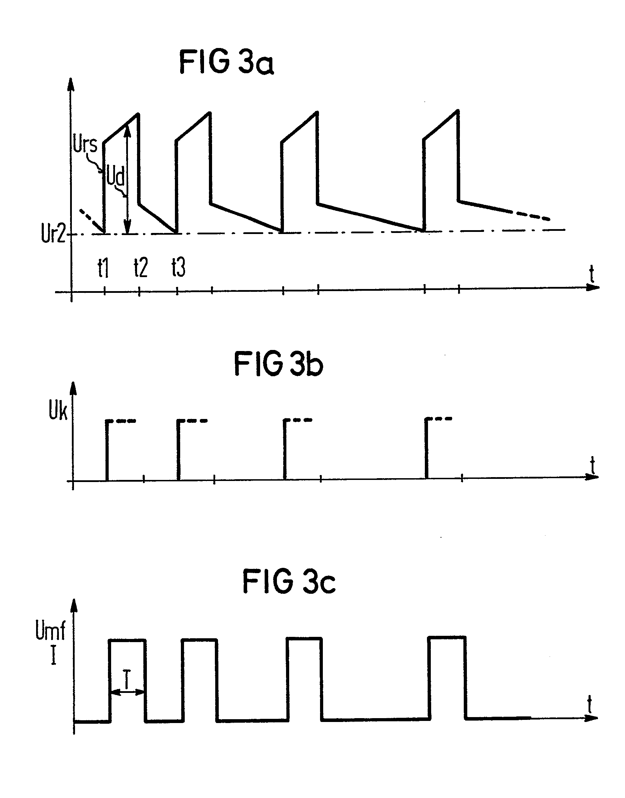

Die Wirkungsweise des erfindungsgemäßen Luftmassenmessers wird anhand der in FIG 3 dargestellten zeitlichen Verläufe der genannten Spannungen erläutert.

In FIG 3a sind die zeitlichen Verläufe der Spannungen Urs und Ur2 an den Eingängen des Komparators K dargestellt. FIG 3b zeigt den zeitlichen Verlauf der Ausgangsspannung Uk des Komparators K und FIG 3c den zeitlichen Verlauf der Ausgangsspannung Umf des Monoflops MF.

Da der Spannungsteiler R1-R2 des zweiten Brückenzweiges an der konstanten Brückenspannung Ub liegt, ist auch die am Widerstand R2 abfallende Spannung Ur2 konstant. Ur2 ist in FIG 3a als strickpunktierte Gerade dargestellt.

Ausgehend von einer Situation kurz vor dem Zeitpunkt t1 ist der Sensorwiderstand RS auf eine etwas oberhalb des Temperatur-Sollwertes liegende Temperatur aufgeheizt. Die an ihm abfallende Spannung Urs ist deshalb etwas größer als die Spannung Ur2. Beide dem Komparator K zugeführten Spannungen bewirken an diesem ein Ausgangssignal Uk = 0 (FIG 3b). Das Monoflop MF ist nicht angestoßen, sein Ausgangssignal Umf ist deshalb ebenfalls 0 (FIG 3c).

Durch den zu messenden Luftmassenstrom wird der Sensorwiderstand RS abgekühlt. Dadurch verringert sich sein Widerstandswert und damit auch die an ihm abfallende Spannung Urs. Die Spannung Urs unterschreitet zum Zeitpunkt t1 die als Schwellwert fungierende Spannung Ur2, wodurch am Ausgang des Komparators K die Spannung Uk schlagartig ansteigt (FIG 3b). Durch diesen Spannungsanstieg wird das Monoflop MF angestoßen und gibt für eine vorbestimmte Dauer T ein Ausgangssignal Umf ab (FIG 3c).

Durch dieses Ausgangssignal wird der Schalter S geschlossen, welcher die Konstantstromquelle Q parallel zum Kompensationswiderstand RK schaltet. Diese Konstantstromquelle Q liefert einen konstanten Heizstrom I, der von der Konstantspannungsquelle SQ über die Leitung L, die Konstantstromquelle Q, den Schalter S und den Sensorwiderstand RS wieder zurück zur Konstantspannungsquelle SQ fließt. Dieser Heizstrom I ist etwa 50 bis 100 mal größer als der Strom, welcher bei geöffnetem Schalter S durch den Sensorwiderstand RS fließt. Infolge dessen springt die am Sensorwiderstand RS abfallende Spannung Urs im Zeitpunkt t1 auf einen hohen Wert. Damit ist sie wesentlich größer als die Schwellwertspannung Ur2, wodurch das Ausgangssignal Uk des Komparators K sofort wieder zu 0 wird.

Durch den Heizstrom I wird der Sensorwiderstand S erwärmt und erhöht deshalb seinen Widerstandswert. Dadurch steigt die an ihm abfallende Spannung Urs während der Heizphase zwischen den Zeitpunkten t1 und t2.

Im Zeitpunkt t2 endet die Standzeit des Ausgangssignals Umf des Monoflops MF, wodurch der Schalter S wieder geöffnet wird. Dadurch fällt die am Sensorwiderstand RS abfallende Spannung Urs wieder auf ihren "Normalwert", der durch den Widerstandswert des Sensorwiderstandes und die Brückenspannung Ub vorgegeben ist. Durch die nun wieder einsetzende Abkühlung des Sensorwiderstandes durch den Luftmassenstrom sinkt die Spannung Urs so lange, bis sie zum Zeitpunkt t3 wieder die Schwellwertspannung Ur2 unterschreitet. Zu diesem Zeitpunkt beginnt der Vorgang von neuem.

Bei der Darstellung der zeitlichen Spannungsverläufe in FIG 3 wird davon ausgegangen, daß ein mit fortschreitender Zeit abnehmender Luftmassenstrom gemessen wird. Dies ist daran zu erkennen, daß die Pausen zwischen den einzelnen Heizphasen mit fortschreitender Zeit größer werden.

Da der Verlauf der am Sensorwiderstand RS abfallenden Spannung Urs in allen Heizphasen nahezu gleich ist und da auch der Heizstrom I, dessen Verlauf (identisch mit dem des Signals Umf) in FIG 3c dargestellt ist, in allen Heizphasen konstant ist, ist auch die Heizleistung aller Heizphasen gleich groß und kann deshalb als Konstante betrachtet werden. Unter dieser Voraussetzung ist der zu bestimmende Luftmassenstrom proportional zur Frequenz der Heizphasen. In der Zuleitung L ist deshalb ein Strommeßinstrument M angeordnet, dessen Ausgangssignal, welches zu dem Heizstrom I proportional ist, einer Auswerteeinheit LM zugeführt wird. Mittels dieser Auswerteeinheit LM ist die Größe des momentanen Luftmassenstromes einfach zu bestimmen.

## Ansprüche

1. Luftmassenmesser, mit einer Brückenschaltung,
- die einen Sensorwiderstand (RS), einen Kompensationswiderstand (RK) sowie einen ersten (R1) und zweiten Widerstand (R2) aufweist, wobei bei abgeglichener Brücke das Verhältnis RS zu R2 gleich dem Verhältnis RK zu R1 ist,
- die von einer Brückenspannung (Ub) gespeist wird und
- deren Diagonalspannung (Ud) als Steuersignal für einen den Sensorwiderstand (RS) auf einen vorgegebenen Temperatur-Sollwert aufheizenden Heizstrom (I) dient,
**dadurch gekennzeichnet,**
- daß in einem ersten Brückenzweig (A-B-C) eine Reihenschaltung von Kompensationswiderstand (RK) und Sensorwiderstand (RS) und in einem zweiten Brückenzweig (A-D-C) eine Reihenschaltung des ersten (R1) und zweiten Widerstandes (R2) liegt,
- daß parallel zum Kompensationswiderstand (RK) eine Reihenschaltung aus einer Stromquelle (Q) und einem Schalter (S) angeordnet ist,
- daß ein Komparator (K) vorgesehen ist, an dessen invertierendem Eingang die am Sensorwiderstand (RS) abfallende Spannung (Urs) und an dessen nichtinvertierendem Eingang die am zweiten Widerstand (R2) abfallende Spannung (Ur2) anliegt,
- daß ein Monoflop (MF) mit einer vorgegebenen Standzeit (T) vorgesehen ist, welches vom Ausgangssignal (Uk) des Komparators (K) angestoßen wird und von dessen Ausgangssignal (Umf) der Schalter (S) betätigt wird.

2. Luftmassenmesser nach Anspruch 1,
**dadurch gekennzeichnet,** daß in einer Speiseleitung (L) der Brückenschaltung ein Strommeßinstrument (M) angeordnet ist, dessen Ausgangssignal einer Auswerteeinheit (LM) für die Luftmassenmessung zugeführt ist.

3. Luftmassenmesser nach Anspruch 1,
**dadurch gekennzeichnet,** daß die Brückenspannung (Ub) eine konstante Spannung ist.

4. Luftmassenmesser nach Anspruch 1,
**dadurch gekennzeichnet,** daß die Stromquelle (Q) eine Konstant-Stromquelle ist.

# FIG 1

# FIG 2

# FIG 3a

Urs

Ud

Ur2

t1  t2  t3

t

# FIG 3b

Uk

t

# FIG 3c

Umf
I

T

t

Europäisches
Patentamt

**EUROPÄISCHER RECHERCHENBERICHT**

Nummer der Anmeldung

EP 89 10 9256

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 429 729 (WEBER)<br>* Seite 7, Absätze 1-3; Figuren 3-4b *<br>--- | 1,2,3,4 | G 01 F 1/68 |
| Y | US-A-4 753 111 (CARON)<br>* Spalte 2, Zeile 12 - Spalte 3, Zeile 5; Figuren 1,2 *<br>--- | 1,2,3,4 | |
| A | US-A-2 650 496 (MIDDLETON)<br>* Spalte 3, Zeile 55 - Spalte 4, Zeile 69; Figur 1 *<br>--- | 1 | |
| A | DE-A-2 444 511 (VOLKSWAGENWERK)<br>* Seite 6, Absatz 2 - Seite 7, Absatz 1; Figur 2 *<br>--- | 1 | |
| A | INSTITUTE OF ELECTRICAL AND ELECTRONICS ENGINEERS, PROCEEDINGS OF THE 23RD ANNUAL CONFERENCE ON ENGINEERING IN MEDICINE AND BIOLOGY, Washington, DC, US, 15.-19. November 1970, vol. 12, Seite 282; M.H. REID: "A device for measuring tissue bulk blood flow using thermal dilution"<br>* Seite 282, linke Spalte, Absätze 1,2; linke Spalte, letzter Absatz; rechte Spalte, Absatz 1; Figur 1 *<br>----- | 1 | |

RECHERCHIERTE SACHGEBIETE (Int. Cl.5)

G 01 F

Der vorliegende Recherchenbericht wurde für alle Patentansprüche erstellt

| Recherchenort | Abschlußdatum der Recherche | Prüfer |
|---|---|---|
| DEN HAAG | 05-02-1990 | HEINSIUS R. |

EPO FORM 1503 03.82 (P0403)